(19) Europäisches Patentamt / European Patent Office / Office européen des brevets

(11) **EP 1 511 187 B1**

(12) **EUROPEAN PATENT SPECIFICATION**

(45) Date of publication and mention
of the grant of the patent:
**05.06.2013   Bulletin 2013/23**

(51) Int Cl.:
***H04W 52/42*** *(2009.01)*      ***H04W 52/16*** *(2009.01)*

(21) Application number: **04019982.0**

(22) Date of filing: **23.08.2004**

(54) **Transmission power control for multiple codes multiple antennas system**

Sendeleistungsregelung für ein Mehrkodemehrantennensystem

Commande de puissance de transmission pour système à plusieurs antennes à codes multiples

(84) Designated Contracting States:
**DE FI FR GB IT SE**

(30) Priority:   **23.08.2003   KR 2003058555**

(43) Date of publication of application:
**02.03.2005   Bulletin 2005/09**

(73) Proprietors:
• **Samsung Electronics Co., Ltd.
Suwon-si, Gyeonggi-do, 443-742 (KR)**
• **Seoul National University Industry Foundation
Seoul (KR)**

(72) Inventors:
• **Kim, Yung-Soo,
Samsung Electronics Co., Ltd.
Suwon-si,
Gyeonggi-do (KR)**
• **Lee, Jong-Hyeuk,
Samsung Electronics Co., Ltd.
Suwon-si,
Gyeonggi-do (KR)**
• **Kim, Sung-Jin,
Samsung Electronics Co., Ltd.
Suwon-si,
Gyeonggi-do (KR)**
• **Park, Chang-Soon
Chungcheongbuk-do (KR)**
• **Lee, Kwang-Bok
Seoul (KR)**

(74) Representative: **Grünecker, Kinkeldey,
Stockmair & Schwanhäusser
Leopoldstrasse 4
80802 München (DE)**

(56) References cited:
• **LEUNG H C J ET AL: "Optimal power allocation scheme on generalized layered space-time coding systems" ICC 2001. 2001 IEEE INTERNATIONAL CONFERENCE ON COMMUNICATIONS. CONFERENCE RECORD. HELSINKY, FINLAND, JUNE 11 - 14, 2001; [IEEE INTERNATIONAL CONFERENCE ON COMMUNICATIONS], NEW YORK, NY : IEEE, US, vol. 6, 11 June 2001 (2001-06-11), pages 1706-1710, XP010553161 ISBN: 978-0-7803-7097-5**
• **IL-MIN KIM ET AL: "Variable rate sapce-time block codes in mpsk systems" CONFERENCE RECORD OF THE 36TH. ASILOMAR CONFERENCE ON SIGNALS, SYSTEMS, & COMPUTERS. PACIFIC GROOVE, CA, NOV. 3 - 6, 2002; [ASILOMAR CONFERENCE ON SIGNALS, SYSTEMS AND COMPUTERS], NEW YORK, NY : IEEE, US, vol. 2, 3 November 2002 (2002-11-03), pages 1122-1126, XP010638377 ISBN: 978-0-7803-7576-5**

EP 1 511 187 B1

**Description**

**BACKGROUND OF THE INVENTION**

1. Field of the Invention

The present invention relates to a wireless communication apparatus and a method for a multiple transmit and receive antenna system using multiple codes, and more particularly to an apparatus and a method, which can allocate transmit power depending on transmit signals.

2. Description of the Related Art

Generally, a Bell Labs layered space-time (BLAST) system uses a multiple transmit-receive antenna. The BLAST system employs suitable signal processing at a receive end to improve spectral efficiency. In other words, a high data rate is achieved by transferring independent substreams from multiple transmit/receive antennas under a rich-scattering wireless channel environment employing channels independent of each other between transmit/receive antennas. Each transmitted signal from each transmit antenna is detected in a predetermined order according to channel conditions, and an already-detected transmitted signal is treated through a Successive Interference Cancellation (SIC) process in which a corresponding component is subtracted from a received signal when detecting the next transmitted signal. Herein, from among BLAST systems, a scheme to greater simplify signal processing by independently coding substreams is a Vertical BLAST (V-BLAST).
Meanwhile, a multi-code CDMA system has been suggested as a transmission scheme for a high and variable data rate. Herein, according to a primary notion of the multi-code CDMA system, data of a certain user are divided into several streams and transferred in parallel by allocating an orthogonal code to each stream. Accordingly, the V-BLAST system employing the multi-code CDMA transmission scheme is expected to be an important telecommunication system in a next generation mobile telecommunication, which will require a high data rate.
A reception scheme of and a performance analysis about the V-BLAST system performed until now have been deployed under a frequency-flat fading channel environment, that is, based on the assumption that a propagation delay duration_is much smaller than a symbol duration. However, signals are seriously distorted under the frequency-flat fading channel environment having a propagation delay. This phenomenon is a more serious problem under a highspeed data telecommunication environment in which the symbol duration is very short. Therefore, under the frequency-selective fading channel environment, although the multi-code V-BLAST system employs orthogonal codes, an interference occurrence between codes is inevitable. Accordingly, it is necessary to remove the interference occurrence between codes.
A conventional method employs a group detection technique used in a CDMA system in order to remove correlation between codes. However, a maximum dimension of a matrix required while inverting a matrix for a group decorrelating detector through the group detection technique is equal to a number obtained after multiplying the number of antennas by the number of codes. Accordingly, as the number of used codes increases, a computation amount remarkably increases, and the group detection technique will encounter serious problems when applied to a real system.
Conventional techniques also include a technique for removing Multi-Code Interference (MCI) by using a parallel interference cancellation scheme in a multi-code system of a single transmit-receive antenna. However, since the technique has to simultaneously process received signals de-spread with respect to all codes, the technique has a problem in that hardware complexity increases in proportion to the number of codes. On the other hand, since a SIC scheme individually processes each received signal for each code in order, the SIC scheme has a relatively low hardware complexity as compared with a parallel Interference Cancellation (PIC) scheme.
Meanwhile, according to a characteristic of a multi-code system, all transmitted signals corresponding to each code reach a receive end through the same channel. Herein, after de-spreading the transmitted signals, a receive power difference can exist due to difference between correlation values of codes. However, in the multi-code system, intensity of receive power seldom exists with respect to all codes. This is a characteristic different from an uplink multi-user CDMA environment. Generally, in the SIC scheme, a signal with the greatest strength is detected first of all, so that reliability increases. Accordingly, if the SIC scheme is employed to mitigate MCI, a process for detection ordering employed through a conventional SIC scheme will have a negligible effect. Accordingly, it is necessary to overcome performance limitations for successive MCI cancellation methods caused by the SIC scheme.
The publication titled "Optimal Power Allocation Scheme on Generalized Layered Space-Time Coding Systems," by Leung Hang Ching Jason et al., refers to an optimal power allocation scheme on generalized layered space-time coding systems. Both the design and the decoding of space-time code become complex, for example, for a 8-transmit antenna system with QPSK symbol that requires calculating the Euclidean distances. A generalized layered space time, GLST, code structure reduces the complexity by separating transmit antennas into groups. By equalizing the derivative of an individual FER, the optimum performance of the GLST system can be attained. Through simulations, it has been shown that power allocation can lead to a significant performance gain, around 1 to 2.5 dB depending on the system configuration. According to a general layout of a GLST system R space-time encoders are used which are by themselves optimum space-time encoders. The i-th encoder occupies a total of $n_i$ transmit antennas during the transmission. The number of transmit antennas used by each encoder can be different and the total number used is equal to the total number of transmit antennas. The assignment of the transmit antennas to the space-time coder is controlled by a sequence of mappings in time. In decoding the transmit side knows nothing about the channel and the receive side has perfect knowledge about it. First, an order of decoding is selected. This order can affect the system performance. Different power levels are allocated to different codes according to their positions in the decoding order. As this power allocation has to be done at the transmitter which has no knowledge of the instantaneous channel information, the transmitter can select an arbitrary decoding order and then allocate power according to that order.

The publication titled "Variable Rate Space-Time Block Codes in MPSK Systems," by Il-Min Kim and Vahin Tarokh, refers to variable rate space-time block codes in MPSK systems. A multiple antenna systems is considered when combined array processing with space time coding is used. Variable rate space-time block codes are presented for two, three and four transmit antennas and optimize the transmit power so that the average BER is minimized.

**Summary of the Invention**

Accordingly, the present invention has been made to solve the above-mentioned problems occurring in conventional systems. It is the object of the present invention to provide an essential technique in a next generation mobile telecommunication requiring a high data rate by suggesting an effective method for performance improvement of a multi-code V-BLAST system.

This object is solved by the subject matter of the independent claims.

Preferred embodiments are defined by the dependent claims.

An aspect of the present invention is to provide an effective detection algorithm for a multi-code V-BLAST system and a transmit power allocation method for the detection algorithm under a frequency-selective fading channel environment.

Another aspect of the present invention is to provide a Successive Interference Cancellation (SIC) in both a code domain and an antenna domain by using a suggested detection algorithm so as to successively perform cancellation with respect to Multi-Code Interference (MCI).

A further aspect of the present invention is to provide an effective transmit power allocation method suitable for a detection algorithm.

In order to accomplish the above, there is provided a method for allocating transmit power in a receiver of a multi-code multiple antenna system including M transmit antennas and N receive antennas, the method employing K spreading codes to distinguish channels, the method including steps of determining a power ratio $\left(\dfrac{\beta}{\eta}\right)$ between transmit power of two spreading codes adjacent to each other from among the spreading codes by using a ratio ($\gamma$) of power of combined channel signals to power of noises and transmitting a determined power ratio ($\gamma$) to a transmitter, wherein the power ratio ($\gamma$) is proportional to the power of the combined channel signals, is inverse proportional to the power of the noises, and is determined to have a value within a range between zero and one.

There is further provided a method for allocating transmit power in a transmitter of a multi-code multiple antenna system including M transmit antennas and N receive antennas, the method employing K spreading codes to distinguish channels, the method including steps of receiving a power ratio ($\gamma$) between transmit power ($P_k, P_{k+1}$) to be allocated to each of two successive spreading codes, as feedback information send from a receiver and allocating the transmit power ($P_k$) according to K spreading codes by substituting the power ratio ($\gamma$) and total transmit power ($P_T$) into an equation,

$$P_k = \left(\frac{1-\gamma}{1-\gamma^k} P_T\right)\gamma^{k-1}, \quad k = 1, 2, \cdots, K$$
.

There is still further provided a method for allocating transmit power in a multi-code multiple antenna system including M transmit antennas and N receive antennas, the method employing K spreading codes to distinguish channels, the method including steps of determining a power ratio ($\gamma$) such that, from among the K channels transmitted through the M transmit antennas has been measured, a signal-to-noise of each of which has been measured, a higher power is allocated to a channel with a higher signal-to-noise ratio than to a channel with a lower signal-to-nose-ratio; dividing total transmit power ($P_T$) into transmit power corresponding to each of the K channels by using the power ratio ($\gamma$); and distributing the transmit power divided according to the K channels to each of the M antennas.

## BRIEF DESCRIPTION OF THE DRAWINGS

The above object and other aspects, features and advantages of the present invention will be more apparent from the following detailed description taken in conjunction with the accompanying drawings, in which:

FIG. 1 is a block diagram illustrating a wireless communication system according to one embodiment of the present invention;
FIG. 2 is a detailed block diagram illustrating a successive MCI cancellation with V-BLAST detection part of a receiver structure shown in FIG. 1;
FIG. 3 is a flowchart showing a signal processing procedure;
FIG. 4 illustrates an overall structure for transmit power allocation; and
FIG. 5 is a graph showing an example simulation result according to one embodiment of the present invention.

## DETAILED DESCRIPTION OF THE PREFERRED EMBODIMENTS

Hereinafter, preferred embodiments of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may make the subject matter of the present invention unclear.

A. Overview

An effective detection algorithm for a multi-code V-BLAST system and a transmit power allocation method for the detection algorithm under a frequency-selective fading channel environment will now be described in detail. In particular, the detection algorithm suggested according to the present invention employs a method for successively canceling a Multi-Code Interference (MCI). Accordingly, a Successive Interference Cancellation (SIC) is employed in both a code domain and a space domain. An effective transmit power allocation suitable for such a detection algorithm is also described. Therefore, transmit power allocated to each code is computed using the effective transmit power allocation suitable for such a detection algorithm. Herein, the transmit power is determined as a simple ratio of power of a certain code signal to power of a next code signal. Also, transmit power is allocated to each transmit antenna based on the computed code transmit power. As described above, transmit power computed at a receive end is fed back toward a transmit end through a feedback channel.

In addition, a detection algorithm according to the present invention proposes signal processing suitable for a V-BLAST system with respect to received signals propagation-delayed by a time period as long as a chip time unit, based on an equation thoroughly reflecting all correlation between codes. In other words, a V-BLAST detection algorithm is performed by a particular antenna based on an presumption that output signals of rake fingers obtained through various multi-paths are received by additional virtual receive antennas. In other words, this is a result obtained when the multi-path diversity obtainable in a CDMA method is regarded as the virtual receive antenna diversity. Also, when detecting a transmitted signal in a code domain, a simple SIC scheme is employed to remarkably reduce the complexity of an overall system and to prevent performance deterioration due to MCI. That is, the simple SIC scheme avoids a problem of increasing hardware complexity caused by the "Parallel Interference Cancellation (PIC)". scheme and problems of increasing a computational amount caused when the conventional group de-correlating detector is employed, by constantly maintaining matrix dimension when inverting a matrix as the number of independent transmitted data corresponding to a code, that is, the number of transmit antennas regardless of increase of the number of multi-codes. The suggested algorithm employs the SIC method in a code domain, as well as in an antenna domain.

Also, an effective transmit power allocation method suitable for such a detection algorithm is suggested. To this end, transmit power allocated to each code is computed. This transmit power is determined as a simple ratio of power of a certain code signal to power of a next code signal. At this time, a greater amount of power is allocated to the first detected code signal in an order predetermined between transmit/receive ends without performing detection ordering of each code. This is performed to improve performance of the overall system, on the assumption that Signal-to-Interference-Noise Ratio (SINR) is inferior because the first detected code signal includes more interference signals, so that performance of an overall system is more degraded. Additionally, when subtracting a next detected transmit signal from a detected signal in order to perform such transmit power allocation, it is possible to effectively prevent performance degradation resulting from error propagation. These phenomena correspond to effects such as performance improvement when performing detection ordering in a conventional SIC scheme. Accordingly, as described above, performance can be effectively improved by employing a simpler transmit power allocation and omitting a complex detection ordering process in a code domain in which performance cannot be improved. Finally, transmit power allocated to each transmit/ receive antenna is found based on calculated transmit power for each code. As described above, information about transmit power computed at a receive end is fed back toward a transmit end through a feedback channel.

### B. System and Channel Model

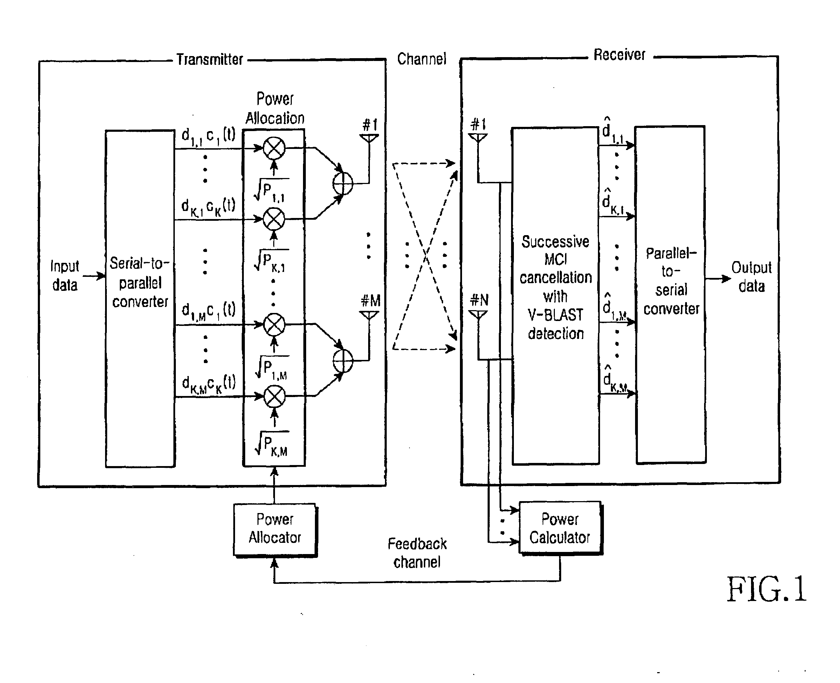

FIG. 1 is a block diagram illustrating a wireless communication system according to one embodiment of the present invention. In the system shown in FIG. 1, it is assumed that a multiple transmit/receive antenna system uses K spreading codes, M transmit antennas, and N receive antennas. First, a data input stream is divided into $KxM$ parallel substreams through a serial-to-parallel converter. Each transmit antenna creates transmission signals by multiplying K substreams by mutually different spreading codes, and then by summing the resultants.

As a result, in a symbol duration, a complex base band equivalent of a transmit signal created by means of a $K^{th}$ spreading code in an $m^{th}$ transmit antenna can be represented as the following Equation 1:

$$s_m(t) = \sum_{k=1}^{K} \sqrt{P_{k,m}}\, d_{k,m} c_k(t), \qquad 0 \le t \le T$$

$P_{k,m}$ : transmit power for the $k$th code at the $m$th transmit antenna:
$d_{k,m}$ : data symbol for the $k$th code at the $m$th transmit antenna:
$c_k(t)$: rectangular-shaped spreading waveform for the $k$th code which takes on the values $\pm 1$ and is defined in $0 \le t \le T$:
$T$ : data symbol duration. ...(1)
M : number of total transmit antennas

In Equation 1, $c_k(t)$ is defined by the following Equation 2:

$$c_k(t) = \sum_{i=0}^{G-1} c_{k,i}\,\psi(t - iT_c), \qquad k = 1, 2, \cdots, K$$

$$\dots(2)$$

where $G = T/T_c$ is the spreading gain, $T_c$ is the chip duration, $c_{k,i}$ is the $i^{th}$ chip for the $k^{th}$ code, and $\psi(t)$ is the chip pulse shape which is assumed to be rectangular, i.e. one for $0 \le t \le T_c$ and zero otherwise. The chip sequence $\{c_{k,i}\}$ is assumed to be a complex spreading sequence, and is given by $c_{k,i} = c_{k,i}^{(I)} + jc_{k,i}^{(Q)}$, where $\left\{ c_{k,i}^{(I)} \right\}$ and $\left\{ c_{k,i}^{(Q)} \right\}$ take on the random values of $+1/\sqrt{2}$ and $-1/\sqrt{2}$ with equal probability. Moreover, $\{c_{k,i}\}$ are mutually orthogonal for all k, i.e. $\sum_{i=0}^{G-1} c_{k_1,i} c_{k_2,i}^{*} = 0$ for $k_1 \ne k_2$, where the superscript * denotes the complex conjugate.

Also, a summation of transmit power of all transmit antennas corresponding to $k^{th}$ code is called $P_k$, and a summation of transmit power for all codes is represented as $P_t$. That is, the $P_k$ and $P_t$ are represented as $\sum_{m=1}^{M} P_{k,m} = P_k$ and $\sum_{k=1}^{K} P_k = P_T$ respectively.

It is assumed that a channel model between a specific transmit antenna and a specific receive antenna is a frequency-selective Rayleigh fading channel. Based on a tapped delay line multi-path channel model, a complex channel impulse response from an $m^{th}$ transmit antenna to a $p^{th}$ receive antenna can be represented as the following Equation 3:

$$h_{p,m}(t) = \sum_{l=0}^{L-1} h_{p,m,l}\delta(t - lT_c),$$

$$\ldots(3)$$

where $L$ corresponds to the number of resolvable multi-path components and $T_c$ refers to a chip duration of a spreading code. All $h_{p,m,l}$ s are assumed to be Gaussian random variables with zero mean, which are identically distributed and independent for all $p$, and $m$. Also, the $h_{p,m,l}$ is assumed to be independent for all $l$s and be determined according to an exponential multi-path intensity profile. In other words, the $h_{p,m,l}$ is determined through an equation $\Omega_t = E[|h_{p,m,l}|^2] = \Omega_n e^{-l\delta}$, where $l$ is defined by 0, 1, $\cdots$, $l$-1, $E[\cdot]$ denotes the expectation and the parameter $\delta$ represents the rate of the exponential decay of the average path power. Meanwhile, it is assumed that a multi-path delay spread is much smaller than the symbol duration, so that an effect of the intersymbol interference is negligible. It is assumed that channel information is not varied during a symbol duration. Also, it is assumed that a receive end exactly measures and knows the channel information required for the detection algorithm.

At this time, a signal received in a $p^{th}$ receive antenna can be represented as the following Equation 4:

$$r_p(t) = \sum_{m=1}^{M}\sum_{l=0}^{L-1} h_{p,m,l}s_m(t - lT_c) + w_p(t)$$
$$= \sum_{k=1}^{K}\sum_{m=1}^{M}\sum_{l=0}^{L-1} \sqrt{P_{k,m}}\, h_{p,m,l}d_{k,m}c_k(t - lT_c) + w_p(t)$$

$$, \qquad p = 1, 2, \ldots, N, \quad \ldots\ldots(4)$$

where $w_p(t)$ corresponds to the additive white Gaussian noise (AWGN) with zero mean at the $p^{th}$ receive antenna with one-sided power spectral density $\sigma^2$.

Such signals received at each receive antenna are processed through the suggested successive MCI cancellation method with V-BLAST detection. As a result, transmitted data are estimated.

C. Detection Process

Hereinafter, a successive MCI cancellation scheme for a multi-code V-BLAST system will be described. To this end, an output signal of a correlator bank for a specific code is represented as an equation without the successive MCI cancellation, which provides the basis for the below description about a detection algorithm for the successive MCI cancellation.

It is assumed that each receive antenna has a rake receiver structure for detecting a received signal corresponding to each multi-path. At this time, in order to detect substreams corresponding to $k_0^{th}$, on the assumption that each receive antenna allows a received signal to pass a correlator bank corresponding to $k_0^{th}$, a complex baseband received signal corresponding to an output of the correlator bank is calculated. For the calculation, a correlator output corresponding to a $k_0^{th}$ code at an $l^{th}$ rake finger of a $p^{th}$ receive antenna is represented as $z_{k0,p,l}$, and defined by the following Equation 5:

$$z_{k_0,p,l} = \int_{lT_c}^{T+lT_c} r_p(t)c_{k_0}^*(t - lT_c)\,dt, \quad k_0 = 1, 2, \cdots, K, \ p = 1, 2, \cdots, N, \ l = 0, 1, \cdots, L-1$$

$$..(5)$$

Also, correlation between two predetermined codes having a discordance of a time difference of $lT_c$ from each other is defined by the following Equation 6:

$$R_{k_0,k}(l) = \int_{-\infty}^{\infty} c_{k_0}(t) c_k(t - lT_c) dt \,.$$

$$\cdots (6)$$

At this time, when defining and expressing all correlator outputs for $k_0^{th}$ codes as an NL x 1 column vector, the following Equation 7 is found:

$$z_{k_0} = \left[ z_{k_0,1,0}, z_{k_0,1,1}, \ldots, z_{k_0,1,L-1}, z_{k_0,2,0}, \ldots, z_{k_0,N,L-1} \right]^T$$

$$= Y_{k_0,k_0} P_{k_0} d_{k_0} + \sum_{k=1,k\neq k_0}^{K} Y_{k_0,k} P_k d_k + n_{k_0}$$

$$\cdots (7)$$

where the superscript $[\cdot]^T$ denotes the transpose. $\mathbf{Y}_{k_0,k} = [\mathbf{Y}_{k_0,k,1}^T, \mathbf{Y}_{k_0,k,2}^T, \cdots, \mathbf{Y}_{k_0,k,N}^T]^T$ represents the $NL \times M$ space-time code correlation matrix, where $\mathbf{Y}_{k0,k,p}$ ($p = 1, 2, \cdots, N$) is the $L \times M$ matrix whose element in the $i$th row and $j$th column, $(\mathbf{Y}_{k_0,k,p})_{i,j}$, is $\sum_{l=0}^{L-1} h_{p,j,l} R_{k_0,k}(l - (i-1))$ .

Herein, each parameter used for equation 7 is defined in Equation 8 to Equation 12, provided below.

$$\mathbf{Y}_{k_0,k} = [\mathbf{Y}_{k_0,k,1}, \mathbf{Y}_{k_0,k,2}, \cdots, \mathbf{Y}_{k_0,k,N}]^T,$$

$$\mathbf{Y}_{k_0,k,p} = \sum_{l=0}^{L-1} \begin{bmatrix} h_{p,1,l} R_{k_0,k}(l) & h_{p,2,l} R_{k_0,k}(l) & \cdots & h_{p,M,l} R_{k_0,k}(l) \\ h_{p,1,l} R_{k_0,k}(l-1) & h_{p,2,l} R_{k_0,k}(l-1) & \cdots & h_{p,M,l} R_{k_0,k}(l-1) \\ \vdots & \vdots & \ddots & \vdots \\ h_{p,1,l} R_{k_0,k}(l-(L-1)) & h_{p,2,l} R_{k_0,k}(l-(L-1)) & \cdots & h_{p,M,l} R_{k_0,k}(l-(L-1)) \end{bmatrix}.$$

$$\cdots (8)$$

Equation 9:

$$\text{i.e., } \left( \mathbf{Y}_{k_0,k,p} \right)_{i,j} = \sum_{l=0}^{L-1} h_{p,j,l} R_{k_0,k}(l-(i-1)), \qquad i = 1, 2, \cdots, L, \quad j = 1, 2, \cdots, M$$

$$\cdots (9)$$

Equation 10:

$$\mathbf{P}_{k_0} = diag\left( \sqrt{P_{k_0,1}}, \sqrt{P_{k_0,2}}, \cdots, \sqrt{P_{k_0,M}} \right).$$

$$\cdots (10)$$

Equation 11:

$$\mathbf{d}_{k_0} = [d_{k_0,1}, d_{k_0,2}, \cdots, d_{k_0,M}]^T.$$

$$\cdots (11)$$

Equation 12:

$$n_{k_0} = \left[ n_{k_0,1,0}, n_{k_0,1,1}, \ldots, n_{k_0,1,L-1}, n_{k_0,2,0}, \ldots, n_{k_0,N,L-1} \right]^T \quad \cdots (12)$$

A symbol $(.)_{i,j}$ among symbols described above represents an element of an $i_{th}$ column and a $j_{th}$ row, and a predetermined element $n_{k,o,p,l}$ of an $NL \times 1$ Gaussian noise vector, $n_{k0}$, is defined by Equation 13:

$$n_{k_0,p,l} = \int_{lT_c}^{T+T_c} w_p(t) c_{k_0}(t - lT_c) dt. \quad \cdots (13)$$

Accordingly, a covariance matrix of a noise vector, $n_{k0}$, can be found through the following Equation 14:

$$\mathbf{R}_{k_0}^{noise} = E[\mathbf{n}_{k_0} \mathbf{n}_{k_0}^H] = \sigma^2 diag(\tilde{\mathbf{R}}_{k_0}, \tilde{\mathbf{R}}_{k_0}, \cdots, \tilde{\mathbf{R}}_{k_0}). \quad \ldots(14)$$

The superscript $[\cdot]^H$ from among subscripts used for Equation 14 denotes the conjugate transpose. An $LxL$ matrix $\tilde{R}_{k_0}$ is a correlation matrix of a spreading waveform vector corresponding to a $k_0^{th}$ code and defined by Equation 15.

$$\tilde{\mathbf{R}}_{k_0} = \int_{-\infty}^{\infty} \mathbf{c}_{k_0}(t) (\mathbf{c}_{k_0}(t))^T dt. \quad \ldots(15)$$

where the $c_{k0}(t)$ represents or refers to a signal vector in which a spreading waveform having components each corresponding to the $k_0^{th}$ code has been delayed by a chip duration, and is defined by $c_{k_0}(t) = [c_{k_0}(t), c_{k_0}(t - T_c), \ldots, c_{k_0}(t - (L-1)T_c)]^T$. Also, it is noted that $(\tilde{R}_{k_0})_{i,j} = R_{k_0,k_0}(|i - j|)$ is obtained from Equation 6 and Equation 15.

In Equation 7, the $Y_{k_0,k_0} P_{k_0} d_{k_0}$ component is a desired signal part for the data vector $d_{k_0}$, and the

$\sum_{k=1, k \neq k_0}^{K} Y_{k_0,k} P_k d_k + n_{k_0}$ component corresponds to a summation of an MCI component and a Gaussian noise component.

Herein, a covariance matrix for the $\sum_{k=1, k \neq k_0}^{K} Y_{k_0,k} P_k d_k + n_{k_0}$ is found by means of Equation 16.

$$E\left[\left(\sum_{k=1, k \neq k_0}^{K} Y_{k_0,k} P_k d_k + n_{k_0}\right)\left(\sum_{k'=1, k' \neq k_0}^{K} Y_{k_0,k'} P_{k'} d_{k'} + n_{k_0}\right)^H\right]$$

$$= \sum_{k=1, k \neq k_0}^{K} E\left[Y_{k_0,k} P_k (Y_{k_0,k} P_k)^H\right] + R_{k_0}^{noise} \quad \ldots(16)$$

When solving equation 16, an equation $E\left[\mathbf{d}_k\mathbf{d}_{k'}^H\right]=\begin{cases}\mathbf{I}_{M\times M}, & \text{if } k=k'\\ \mathbf{O}_{M\times M}, & \text{if } k\neq k'\end{cases}$ is used, in which subscripts $I_{M\times M}$ and $O_{M\times M}$ represents an *MxM* identity matrix and an *MxM* null matrix, respectively. According to a result of the Equation 16, elements of the $Y_{kt,k}$ matrix, which is required for finding the covariance matrix due to MCI, include channels and all correlations between spreading codes for different users. Although the spreading codes can be found, the channels are given, and the correlations between the spreading codes are calculated as mean values in order to more simply calculate the correlations.

Expectations of the correlations are found through the following Equation 17:

$$E\left[R_{k_0,k}(i)R_{k_0,k}(j)\right]=\begin{cases}(G-|i|)T_c^2, & k_0\neq k, i=j\neq 0\\ G^2T_c^2, & k_0=k, i=j=0\\ (G-|i|)T_c^2, & k_0=k, i=\pm j\neq 0\\ 0, & \text{else}\end{cases}$$

$$....(17)$$

where the G refers to a spreading factor $T/T_c$. By using the expectations, an element $\left(R_k^{MCI}\right)_{i',j'}$ corresponding to an

$(i'=L(p-1)+i)^{th}$ column and a $(j'=L(q-1)+j)^{th}$ row of the matrix $\mathbf{R}_k^{MCI}=E\left[\mathbf{Y}_{k_0,k}\mathbf{P}_k\left(\mathbf{Y}_{k_0,k}\mathbf{P}_k\right)^H\right]$ is found by means of Equation 18:

$$\left(\mathbf{R}_k^{MCI}\right)_{i',j'}=E\left[\sum_{m=1}^{M}P_{k,m}\left(\sum_{l=0}^{L-1}h_{p,m,l}R_{k_0,k}(l-(i-1))\sum_{l'=0}^{L-1}h_{q,m,l'}^*R_{k_0,k}(l'-(j-1))\right)\right]$$

$$=\begin{cases}\displaystyle\sum_{m=1}^{M}P_{k,m}\sum_{\substack{l=i-j\\l=i-1}}^{L-1}h_{p,m,l}h_{q,m,l-(i-j)}^*\left(G-|l-(i-1)|\right)T_c^2, & i\geq j\\[2em] \displaystyle\sum_{m=1}^{M}P_{k,m}\sum_{\substack{l=j-i\\l=j-1}}^{L-1}h_{p,m,l-(j-i)}h_{q,m,l}^*\left(G-|l-(j-1)|\right)T_c^2, & j>i\end{cases}$$

$$p,q=1,2,\cdots,N,\ i,j=1,2,\cdots,L \qquad\qquad , k_0\neq k \quad .....(18)$$

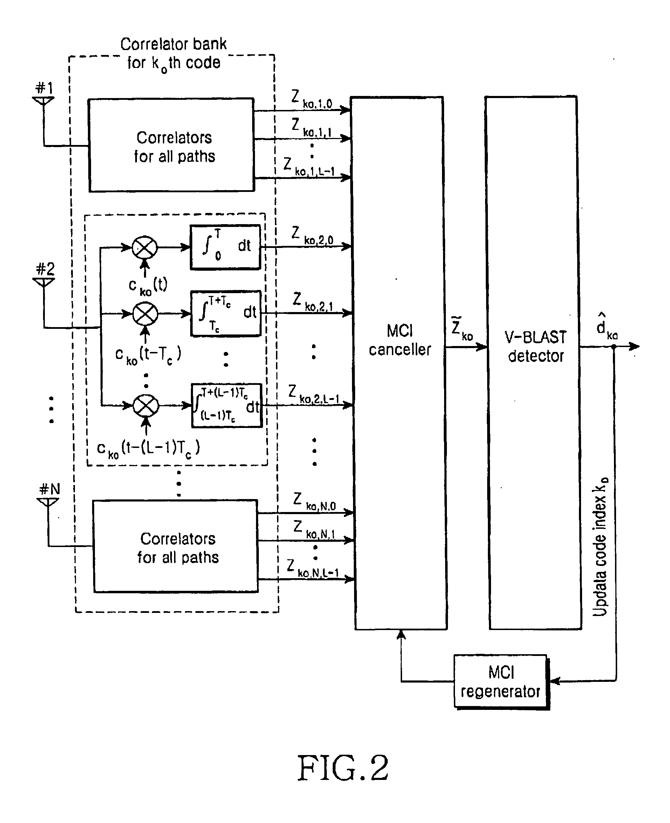

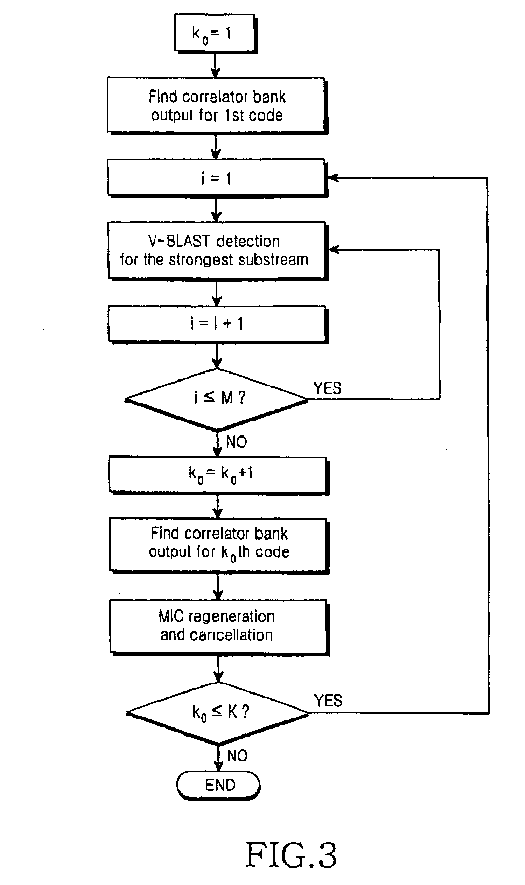

Hereinafter, a successive MCI cancellation scheme for a multi-code V-BLAST system will be described on the basis of equations described above. Herein, a linear weighting vector employs a Zero-Forcing (ZF) scheme. FIG. 2 is a detailed block diagram illustrating a successive MCI cancellation with V-BLAST detection part of a receiver structure, and FIG. 3 is a flowchart showing the signal processing procedure.

Step 1) Initialization for CD-SIC (Code Domain SIC):

$k_0 = 1$

$$\tilde{\mathbf{z}}_1=\mathbf{z}_1=\mathbf{Y}_{1,1}\mathbf{P}_1\mathbf{d}_1+\sum_{k=2}^{K}\mathbf{Y}_{1,k}\mathbf{P}_k\mathbf{d}_k+\mathbf{n}_1$$

Step 2) Initialization for SD-SIC (Space Domain SIC):

$i= 1$

$$\tilde{z}_{k_0}(1) = \tilde{z}_{k_0}$$

$$G_{k_0}(1) = \left(Y_{k_0,k_0}\right)^{+}$$

$$g(1) = \arg\min_{j}\left(G_{k_0}(1)\left(\sum_{k=k_0+1}^{K} R_{k_0,k}^{MCI} + R_{k_0}^{noise}\right)\left(G_{k_0}(1)\right)^{H}\right)$$

Step 3) SD-SIC for the g(i)th substream of the k0th code:

$$w_{k_0,g(i)} = [G_{k_0}(i)]_{g(i)}$$

$$\hat{d}_{k_0,g(i)} = Q\left(w_{k_0,g(i)}\tilde{z}_{k_0}(i)\right)$$

$$\tilde{z}_{k_0}(i+1) = \tilde{z}_{k_0}(i) - \sqrt{P_{k_0,g(i)}}\,\hat{d}_{k_0,g(i)}\langle Y_{k_0,k_0}\rangle_{g(i)}, \quad i < M$$

$$G_{k_0}(i+1) = \left(\langle Y_{k_0,k_0}\rangle_{\overline{g(i)}}\right)^{+}, \quad i < M$$

$$g(i+1) = \arg\min_{j\notin\{g(1),\cdots,g(i)\}}\left(G_{k_0}(i+1)\left(\sum_{k=k_0+1}^{K} R_{k_0,k}^{MCI} + R_{k_0}^{noise}\right)\left(G_{k_0}(i+1)\right)^{H}\right)_{j,j}, \quad i < M$$

Step 4) Repetition or termination for SD-SIC:

If $i < M$, increase $i$ by one and go to Step 3.
Otherwise, go to Step 5.

Step 5) CD-SIC for the substreams of the $(k_0+1)^{th}$ code:

$$\tilde{z}_{k_0+1} = Y_{k_0+1,k_0+1}P_{k_0+1}d_{k_0+1} + \sum_{k=1,k\neq k_0+1}^{K} Y_{k_0+1,k}P_k d_k - \sum_{k=1}^{k_0} Y_{k_0+1,k}P_k \hat{d}_k + n_{k_0+1}, \quad k_0 < K$$

Step 6) Repetition or termination for CD-SIC:

If $k_0 < K$, increase $k_0$ by one and go to Step 2.
Otherwise, terminate the detection procedure. Herein, the subscripts $(.)+$, $[.]_j$, $<.>_i$, and $<\cdot>_{o(i)}$ represent Moore-Penrose pseudo-inverse, an $i^{th}$ column of a given matrix, an $i^{th}$ row of the given matrix, and the deflated version of the given matrix, in which columns $g(1), g(2), \cdots, g(i)$ have been subtracted. The subscript $Q(.)$ denotes a quantization (slicing) operation corresponding to the modulation scheme.

Through the algorithm, step 2) and step 4), which can be called an inner loop, are processes repeated in order to detect data symbols employing identical codes, and are similar to a detection algorithm of a conventional narrowband V-BLAST system. However, the number of columns of the matrix $\mathbf{Y}_{k_0\text{-}k_0}$, which is used for calculating pseudo-inverse increases up to the number of multi-paths, and a matrix exactly using all correlations between spreading codes is employed. Also, the inner loop computes SINR based on MCI when processing detection ordering.

In the meantime, step 1) and step 4), which are called an outer loop, are repeated whenever all data symbols corresponding to each spreading code are detected through the V-BLAST algorithm. The outer loop computes output signals of the correlator bank corresponding to new spreading codes. The outer loop reproduces MCI of data symbols of already-detected spreading codes to subtract the MCI.

D. Transmit Power Allocation

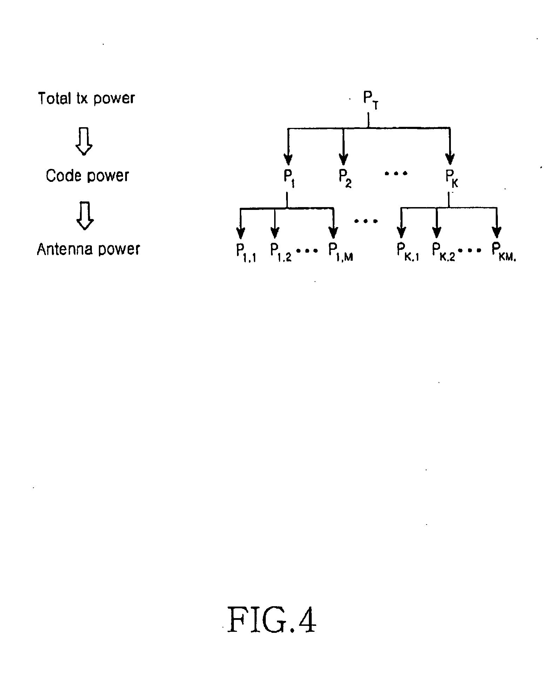

Hereinafter, based on the above-described successive MCI cancellation algorithm, a transmit power allocation scheme for the successive MCI cancellation algorithm will be described. First, all transmit power, that is, all code transmit power for all transmit signals employing identical codes is allocated. Based on the allocated transmit power, transmit power of a variety of antennas corresponding to each code, that is, transmit power of each antenna is allocated. FIG. 4 illustrates an overall structure for transmit power allocation. Such information about each transmit power is calculated at a receive end, and then is fed back to a transmit end. When describing a transmit power allocation method, it is assumed that error propagation due to already detected signals does not exist.

Hereinafter, two methods for allocating code transmit power, i.e. Scheme A and Scheme B, are describes below:

Scheme A

In Scheme A, when calculating a code SINR, a channel is given, and a mean value of code values is calculated. Also, each code transmit power is determined such that the following equations are satisfied. Herein, when allocating code transmit power, it is assumed that all symbols of each transmit antenna corresponding to a specific code have identical transmit power. That is, it is assumed that an equation $P_{k,m}=P_k/M$ is achieved for all $ks$ and $ms$.

The following Equation 19 defines the SINR in a code domain for a $k_0^{th}$ code Equation 19:

$$\Gamma_{k_0}^{CD} = \frac{E\left[\left\|Y_{k_0,k_0}P_{k_0}d_{k_0}\right\|^2\right]}{E\left[\left\|\sum_{k=k_0+1}^{K} Y_{k_0,k}P_k d_k + n_{k_0}\right\|^2\right]}, k_0 = 1,2,\ldots,K \qquad \ldots(19)$$

where $\|\cdot\|$ denotes the Euclidean norm of a vector, and the squared norms are averaged over the spreading sequences as well as the data symbols and the additive noise. $Y_{k_0,k_0}P_{k_0}d_{k_0}$ in Equation 19 is the desired signal vector and

$\sum_{k=k_0+1}^{K} Y_{k_0,k}P_k d_k + n_{k_0}$ in Equation 19 is the MCI-plus-noise vector with the error propagation ignored. Note that the elements of these vectors are the signals posterior to the CD-SIC detection process and prior to the SD-SIC detection process. Based on the equal code domain SINR design, we allocate the code power so that code domain SINR $\Gamma_{k_0}^{CD}$ becomes equal for all codes as described in Equation 20:

$$\Gamma_{k_0}^{CD} = \frac{E\left[\left\|\mathbf{Y}_{k_0,k_0}\mathbf{P}_{k_0}\mathbf{d}_{k_0}\right\|^2\right]}{E\left[\left\|\sum_{k=k_0+1}^{K} \mathbf{Y}_{k_0,k}\mathbf{P}_k \mathbf{d}_k + \mathbf{n}_{k_0}\right\|^2\right]} = \Gamma^{CD}, \quad k_0 = 1, 2,\cdots, K \qquad \ldots(20)$$

To find the code power set that satisfy Equation 20, we assume that all space domain power components for each code have the same values, i.e. $P_{k,m} = P_k/M$ for all $k$ and $m$. Using Equation 17, it can be shown that Equation 20 is reduced to Equations 21-24:

$$\frac{\alpha P_{k_0}}{\beta \sum_{k=k_0+1}^{K} P_k + \eta} = \Gamma^{CD}, \quad k_0 = 1, 2, \cdots, K \qquad \ldots(21)$$

where

$$\alpha = \frac{1}{M} \sum_{p=1}^{N} \sum_{i=1}^{L} \sum_{m=1}^{M} \left( \left| h_{p,m,(i-1)} \right|^2 G^2 T_c^2 + \sum_{\substack{l=0 \\ l \neq i-1}}^{L-1} \left| h_{p,m,l} \right|^2 \left( G - \left| l - (i-1) \right| \right) T_c^2 \right) \qquad \ldots(22)$$

$$\beta = \frac{1}{M} \sum_{p=1}^{N} \sum_{i=1}^{L} \sum_{m=1}^{M} \sum_{\substack{l=0 \\ l \neq i-1}}^{L-1} \left| h_{p,m,l} \right|^2 \left( G - \left| l - (i-1) \right| \right) T_c^2 \qquad \ldots(23)$$

$$\eta = NL\sigma^2 T. \qquad \ldots(24)$$

Solving $K + 1$ simultaneous equations in Equation 21 as derived in Appendix A, we can find the code power values as

$$P_k = \left( \frac{1-\gamma}{1-\gamma^K} P_T \right) \gamma^{k-1}, \quad k = 1, 2, \cdots, K \qquad (25)$$

where

$$\gamma = 1 \left/ \left( 1 + P_T \frac{\beta}{\eta} \right)^{1/K} \right. \qquad (26)$$

Using Equation 23 and Equation 24, $\beta / \eta$ in Equation 26 provides Equation 27, calculated as:

$$\frac{\beta}{\eta} = \frac{T_c^2}{MNL\sigma^2 T} \sum_{p=1}^{N} \sum_{i=1}^{L} \sum_{m=1}^{M} \sum_{\substack{l=0 \\ l \neq i-1}}^{L-1} \left| h_{p,m,l} \right|^2 \left( G - \left| l - (i-1) \right| \right). \qquad \ldots(27)$$

If we assume that G»L, Equation 28 may be approximated as:

$$\frac{\beta}{\eta} \cong \frac{T_c^2 G(L-1)}{MNL\sigma^2 T} \sum_{p=1}^{N} \sum_{m=1}^{M} \sum_{l=0}^{L-1} \left| h_{p,m,l} \right|^2 = p \qquad \ldots(28)$$

Note that $\gamma$ in Equation 26 is the power ratio between the two adjacent code powers, i.e. $\gamma = P_{k+1}/P_k$ for $k =$

$1, 2, \cdots, K$ -1. From Equation 25, it can be seen that the code power values are determined by the total given transmit power $P_T$ and the power ratio $\gamma$.

Scheme B

In scheme B, a mean value for both codes and channels is found when calculating a code SINR. Similarly, when $\beta$, and $\eta$ corresponding to Scheme B are called $\beta_B$ and $\eta_B$, the $\beta_B$ and $\eta_B$ are found by using Equation 29:

$$\frac{\beta_B}{\eta_B} \cong \frac{T(L-1)}{GL\sigma^2}\Omega_{sum} = p, where \qquad \Omega_{sum} = \sum_{l=0}^{L-1}\Omega_l = \sum_{l=0}^{L-1}E\left[\left|h_{p,m,l}\right|^2\right] \qquad ....(29)$$

In Equation 29, when MN approaches $\infty$, that is, MN$\rightarrow\infty$, $\rho$ h approaches to $\rho$, that is, $\rho$ h $\rightarrow\rho$.

Accordingly, when the number of transmit/receive antenna increases, code power ratios found through Scheme A and Scheme B are approximately similar value to each other. Also, in Scheme B, the code power ratio relates to only average power and not instantaneous power of a channel gain. Therefore, when this value is constant and can be exactly measured at the receive end, it is enough to perform only one feedback to the transmit end from the receive end.

Meanwhile, transmit power allocated for each transmit antenna is founded based on the above-found transmit power allocated for each code. In other words, transmit power $P_k$ of all transmit antennas corresponding to one code is found by using an earlier found value. Also, transmit power $P_k$, m of each transmit antenna is allocated through the V-BLAST algorithm such that post-detection SINR, which is obtained after estimating transmit antenna symbols, is identical to all transmit antennas. When representing a post-detection SINR for an $m^{th}$ transmit antenna of a $k_0^{th}$ code with an assumption that $\tilde{\beta}_{k0,m}$ is power for MCI, and $\tilde{\eta}_{k0,m}$ is a Gaussian noise, the post-detection SINR is represented as

$\dfrac{P_{k_0,m}}{\tilde{\beta}_{k_0,m} + \tilde{\eta}_{k_0,m}}$  Accordingly, transmit power of each transmit antenna of $k_0^{th}$ code is allocated such that the following Equation 30 is satisfied:

$$\frac{P_{k_0,m}}{\tilde{\beta}_{k_0,m} + \tilde{\eta}_{k_0,m}} = \bar{\Gamma}_{k_0}, \quad \text{for all } k_0 \text{ and } m \quad \left(\sum_{m=1}^{M}P_{k_0,m} = P_{k_0}\right)$$

$$...(30)$$

An algorithm for solving Equation 30 is as follows:

Step 0) Initialization for outer loop:

$$k_0 = K \qquad\qquad ...(31a)$$

Step 1) Initialization for inner loop:

$$i = 1 \qquad\qquad ...(31b)$$

$$G_{k_0}(1) = \left(Y_{k_0,k_0}\right)^{+} \qquad\qquad ...(31c)$$

Step 2) Calculation of $\beta_{k0,g(i)}$ and $\tilde{\eta}_{k0,g(i)}$ for the g(i)th substream of the $k_0$th code:

$$g(i) = \underset{j \notin \{g(1),\cdots,g(i-1)\}}{\arg\min} \left( \mathbf{G}_{k_0}(i) \left( \sum_{k=k_0+1}^{K} \mathbf{R}_{k_0,k}^{MCI} + \mathbf{R}_{k_0}^{noise} \right) \left( \mathbf{G}_{k_0}(i) \right)^H \right)_{j,j} \qquad \ldots(31d)$$

$$\mathbf{w}_{k_0,g(i)} = \left[ \mathbf{G}_{k_0}(i) \right]_{g(i)} \qquad \ldots(31e)$$

$$\tilde{\beta}_{k_0,g(i)} = \mathbf{w}_{k_0,g(i)} \left( \sum_{k=k_0+1}^{K} \mathbf{R}_{k_0,k}^{MCI} \right) \mathbf{w}_{k_0,g(i)}^H \qquad \ldots(31f)$$

$$\tilde{\eta}_{k_0,g(i)} = \mathbf{w}_{k_0,g(i)} \mathbf{R}_{k_0}^{noise} \mathbf{w}_{k_0,g(i)}^H \qquad \ldots(31g)$$

$$\mathbf{G}_{k_0}(i+1) = \left( \langle \mathbf{Y}_{k_0,k_0} \rangle_{\overline{g(i)}} \right)^+ \qquad \ldots(31h)$$

Step 3) Repetition or termination for inner loop:

Increase i by one and go to Step 2 if i ≤ M.
Otherwise, go to Step 4.

Step 4) Calculation of transmit antenna power for the $k_0$th code:

$$P_{k_0,m} = \left( \tilde{\beta}_{k_0,m} + \tilde{\eta}_{k_0,m} \right) \frac{P_{k_0}}{\sum_{m=1}^{M} \left( \tilde{\beta}_{k_0,m} + \tilde{\eta}_{k_0,m} \right)}, \quad k_0 = 1, 2, \cdots, K, \ m = 1, 2, \cdots, M \qquad \ldots(31i)$$

Step 5) Repetition or termination for outer loop:

Decrease $k_0$ by one and go to Step 1 if $k_0 \geq 1$.
Otherwise, terminate the whole antenna power allocation algorithm.

It should be noted that all final values for the nulling vector and detection ordering, calculated in the power allocation procedure, can be used in the detection procedure described without repeating calculations.

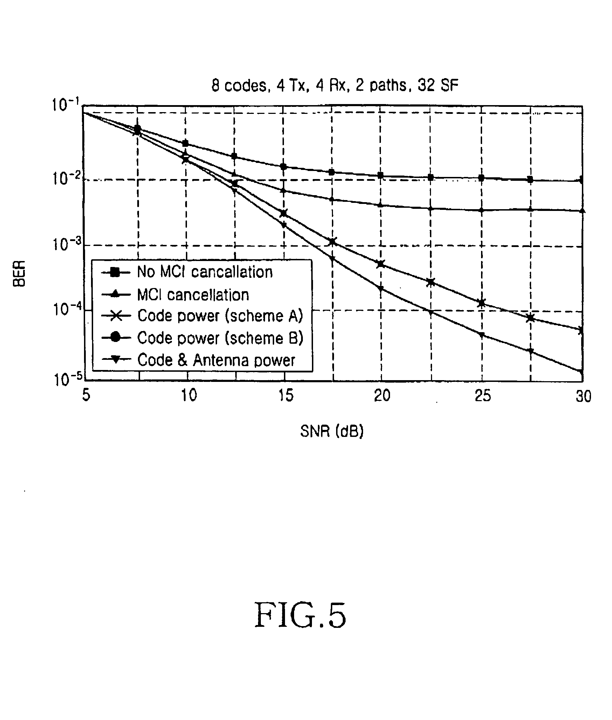

FIG. 5 is a graph showing an example simulation result according to one embodiment of the present invention. Through the simulation, QPSK is employed as a modulation scheme, and an exponential decay rate δ of each path power of a channel has a value of 0.5. Also, variance of each path gain is normalized by using $\Omega_{sum}$ having a value of one ('1'). For spreading codes, orthogonal Walsh-Hadamard codes multiplied by common scrambling codes are used. As scrambling codes, random binary codes are used. Among results of the simulation, SNR is defined by $PT/\delta^2$, where $P$ is equal to $P_T/K$.

FIG. 5 illustrates BER performance comparison when *K, M, N, L,* and *G* are equal to '8', '4', '4', '2', and '32', respectively. When employing the successive MCI cancellation scheme, BER performance is much more improved as compared with a case in which the successive MCI cancellation scheme is not employed.

Differently from a case of employing only the successive MCI cancellation scheme, when employing a code power allocation scheme, the BER performance is continuously improved and is not saturated as the SNR increases. Additionally, Scheme A and Scheme B, which are methods for allocating code power, have approximately identical performance. As described above, this is derived from the fact that code power ratios through Scheme A and Scheme B are approximately equal to each other when employing multiple transmit/receive antennas. When additionally allocating transmit power of an antenna, the BER performance is further improved. However, when the addition transmit power allocation is compared with a previous code transmit power allocation in view of performance improvement, their difference in view of BER performance improvement is small.

As described above, according to the present invention, a simple and effective detection algorithm is suggested by employing an SIC scheme in both an antenna domain and a code domain in order to improve performance of a multi-code V-BLAST system under a frequency-selective fading channel environment. Since the SIC scheme has low hardware complexity and superior performance as compared with a PIC scheme, the present invention has an advantage in view of a system embodiment. Also, according to the present invention, a computation amount can be remarkably reduced as compared with a conventional technique using a group decorrelating detector.

Additionally, according to the present invention, an effective transmit power allocation method is suggested based on a multi-code system characteristic in which all transmitted signals corresponding to each code reach a receive end through the same channel. That is, when a complex detection ordering process used for a typical SIC scheme is employed in a code domain, the detection ordering process seldom improves performance. Therefore, the detection ordering process is replaced with a code transmit power allocation scheme, so that the code transmit power allocation scheme achieves performance improvement. Herein, owing to the above-described multi-code system characteristic, transmit power of codes is determined only by finding a ratio of power of a certain code signal to power of a next code signal. Accordingly, a computation amount is reduced by omitting the complex detection ordering process, and an information amount for feedback is remarkably reduced because only one ratio value is fed back to a transmit end when code transmit power information is fed back to a receive end from the transmit end. In particular, when employing a multi-antenna system having a great number of antennas, although a constant ratio value found by measuring average power of a channel gain is employed, approximately identical performance is achieved. Accordingly, when average power of the channel gain is constant, and the average power is exactly measured, although the magnitude of an instantaneous channel gain is frequently varied depending on time, the code transmit power allocation is sufficiently achieved by performing only one feedback to the transmit end from the receive end.

While the invention has been shown and described with reference to certain preferred embodiments thereof, it will be understood by those skilled in the art that various changes in form and details may be made therein without departing from the scope of the invention.

**Claims**

1. A method for allocating transmit power in a receiver of a multi-code multiple antenna system including M transmit antennas and N receive antennas, the method employing K spreading codes to distinguish channels, the method comprising the steps of:

   determining a power ratio $\gamma$ between transmit power of two adjacent spreading codes by using a ratio $\dfrac{\beta}{\eta}$ of

   power of combined channel signals to noise power; and
   transmitting a determined power ratio $\gamma$ to a transmitter,
   wherein the ratio $\gamma$ is proportional to the power of the combined channel signals, is inverse proportional to the noise power, and is determined to have a value within a range between '0' and '1'.

2. The method as claimed in claim 1, wherein the ratio $\gamma$ is determined by means of an equation

$$\gamma = 1 \left/ \left( 1 + P_T \frac{\beta}{\eta} \right)^{1/\kappa} \right. ,$$

   wherein $P_T$ denotes total given transmit power, $\dfrac{\beta}{\eta}$ denotes the ratio of the combined channel signals to the noise power, and k denotes a number of total channels.

3.

The method as claimed in claim 2, wherein when $G$ is approximate to $L$, $\dfrac{\beta}{\eta}$ is approximated by equation

$$\frac{\beta}{\eta} \cong \frac{T_c^2 G(L-1)}{MNL\sigma^2 T} \sum_{p=1}^{N} \sum_{m=1}^{M} \sum_{l=0}^{L-1} \left|h_{p,m,l}\right|^2 = \rho.$$

4. The method as claimed in claim 2, wherein, in finding a signal-to-noise according to the spreading codes by calculating mean values of the all channels, $\dfrac{\beta}{\eta}$ are found by using equation,

$$\frac{\beta_B}{\eta_B} \cong \frac{T(L-1)}{GL\sigma^2} \Omega_{sum} = p,$$

where

$$\Omega_{sum} = \sum_{l=0}^{L-1} \Omega_l = \sum_{l=0}^{L-1} E\left[\left|h_{p,m,l}\right|^2\right]$$

wherein all $|h_{p,m,l}|^2$·s for a particular path index $l$ are assumed to be independent and identically distributed random variables with finite mean $\Omega_l$ for all $p$ and $m$.

5. A method for allocating transmit power in a transmitter of a multi-code multiple antenna system including M transmit antennas and N receive antennas, the method employing K spreading codes to distinguish channels, the method comprising the steps of:

   receiving a power ratio $\gamma$ between transmit powers $P_k$, $P_{k+1}$ to be allocated to each of two adjacent spreading codes, as feedback information sent from a receiver; and
   allocating the transmit power $P_k$ according to K spreading codes by substituting the power ratio $\gamma$ and total transmit power $P_T$ into equation

$$P_k = \left(\frac{1-\gamma}{1-\gamma^K} P_T\right)\gamma^{k-1}, \quad k = 1, 2, \cdots, K.$$

6. The method as claimed in claim 5, further comprising a step of allocating transmit power to each of the M transmit antennas by distributing the transmit power $P_k$ allocated according to each spreading code to the M transmit antennas.

7. The method as claimed in claim 6, wherein transmit power $P_k$ for each of the M transmit antennas is allocated by means of equation

$$P_{k,m} = \frac{1}{M}\left(\frac{1-\gamma}{1-\gamma^K} P_T\right)\gamma^{k-1},$$

$k = 1,2,\cdots, K, m = 1,2,\cdots, M,$
wherein M denotes the number of total transmit antennas, k denotes an index designating a spreading code, and m denotes an index designating a transmit antenna.

8. The method as claimed in claim 6, wherein the step dividing transmit power $P_{k_0}$ for a predetermined channel $k_0$ from among K channels into transmit power of each of M antennas comprises the steps of:

1) setting $k_o$ to K;
2) determining $G_{k_0}$ by means of $(Y_{k_0,k_0})^+$ after a predetermined index i is set to '1';
3) calculating $\tilde{\beta}_{k_0,g(i)}$ and $\tilde{\eta}_{k_0,g(i)}$ for a g(i)th substream of $k_0$ by mean of equation;

$$g(i) = \underset{j\notin\{g(1),\cdots,g(i-1)\}}{\arg\min}\left(G_{k_0}(i)\left(\sum_{k=k_0+1}^{K} R_{k_0,k}^{MCI} + R_{k_0}^{noise}\right)\left(G_{k_0}(i)\right)^H\right)_{j,j}$$

$$w_{k_0,g(i)} = [G_{k_0}(i)]_{g(i)}$$

$$\tilde{\beta}_{k_0,g(i)} = w_{k_0,g(i)}\left(\sum_{k=k_0+1}^{K} R_{k_0,k}^{MCI}\right)w_{k_0,g(i)}^H$$

$$\tilde{\eta}_{k_0,g(i)} = w_{k_0,g(i)} R_{k_0}^{noise} w_{k_0,g(i)}^H$$

4) determining transmit power of a channel $k_o$ in a g(i)th antenna equation;

$$P_{k_0,m} = \left(\tilde{\beta}_{k_0,m} + \tilde{\eta}_{k_0,m}\right)\frac{P_{k_0}}{\sum_{m=1}^{M}\left(\tilde{\beta}_{k_0,m} + \tilde{\eta}_{k_0,m}\right)}, \quad k_0 = 1,2,\cdots,K, m = 1,2,\cdots,M$$

wherein, the i is increased by '1', $G_{k_0}$ corresponding to the increased i is determined by means of $(\langle Y_{k0,k0}\rangle_{\overline{g(i)}})^+$, and then, a process for determining transmit power by means of steps 3) and 4) is repeated until the i reaches M.

**Patentansprüche**

1. Verfahren zum Zuweisen von Sendeleistung in einem Empfänger eines Mehrcode-Mehrantennen-Systems, das *M* Sendeantennen und *N* Empfangsantennen enthält, wobei das Verfahren K Spreizcodes zum Unterscheiden von Kanälen verwendet, wobei das Verfahren folgende Schritte umfasst:

Bestimmen eines Leistungsverhältnisses $\gamma$ zwischen den Sendeleistungen von zwei benachbarten Spreizcodes unter Verwendung eines Verhältnisses $\dfrac{\beta}{\eta}$ der Leistung von kombinierten Kanalsignalen zu der Rauschleistung,

Senden eines bestimmten Leistungsverhältnisses $\gamma$ zu einem Sender,
wobei das Verhältnis $\gamma$ proportional zu der Leistung der kombinierten Kanalsignale ist, umgekehrt proportional zu der Rauschleistung ist und mit einem Wert im Bereich zwischen '0' und '1' bestimmt wird.

**2.** Verfahren nach Anspruch 1, wobei das Verhältnis $\gamma$ mittels der folgenden Gleichung bestimmt wird:

$$\gamma = 1 \left/ \left( 1 + P_T \frac{\beta}{\eta} \right)^{1/K} \right.$$

wobei $P_T$ die gesamte gegebene Sendeleistung angibt, $\dfrac{\beta}{\eta}$ das Verhältnis der kombinierten Kanalsignale zu der Rauschleistung angibt und $k$ die Gesamtanzahl von Kanälen angibt.

**3.** Verfahren nach Anspruch 2, wobei, wenn $G$ an $L$ angenähert wird, $\dfrac{\beta}{\eta}$ durch die folgende Gleichung angenähert wird:

$$\frac{\beta}{\eta} \cong \frac{T_c^2 G(L-1)}{MNL\sigma^2 T} \sum_{p=1}^{N} \sum_{m=1}^{M} \sum_{l=0}^{L-1} \left| h_{p,m,l} \right|^2 = \rho$$

**4.** Verfahren nach Anspruch 2, wobei, wenn ein Signal-zu-Rauschen-Verhältnis in Übereinstimmung mit den Spreizcodes durch das Berechnen von Mittelwerten aller Kanäle erhalten $\dfrac{\beta}{\eta}$ wird, unter Verwendung der folgenden Glei-chung erhalten wird:

$$\frac{\beta_B}{\eta_B} \cong \frac{T(L-1)}{GL\sigma^2} \Omega_{sum} = p,$$

wobei

$$\Omega_{sum} = \sum_{l=0}^{L-1} \Omega_l = \sum_{l=0}^{L-1} E\left[ \left| h_{p,m,l} \right|^2 \right]$$

wobei alle $|h_{p,m,l}|^2$ für einen bestimmten Pfadindex $1$ als unabhängige und gleich verteilte Zufallsvariablen mit einem endlichen gemittelten $\Omega_1$ für alle $p$ und $m$ angenommen werden.

**5.** Verfahren zum Zuweisen von Sendeleistung in einem Sender eines Mehrcode-Mehrantennen-Systems, das $M$ Sendeantennen und $N$ Empfangsantennen enthält, wobei das Verfahren $K$ Spreizcodes zum Unterscheiden von Kanälen verwendet, wobei das Verfahren folgende Schritte umfasst:

Empfangen eines Leistungsverhältnisses $\gamma$ zwischen Sendeleistungen $P_k$, $P_{k+1}$, die jeweils zwei benachbarten Spreizcodes zuzuweisen sind, als von einem Empfänger gesendete Rückmeldungsinformationen, und Zuweisen der Sendeleistung $P_k$ in Übereinstimmung mit $K$ Spreizcodes durch das Einsetzen des Leistungsverhältnisses $\gamma$ und der Gesamtsendeleistung $P_T$ in die Gleichung

$$P_k = \left( \frac{1-\gamma}{1-\gamma^K} P_T \right) \gamma^{k-1}, \ k = 1, 2, ..., K$$

**6.** Verfahren nach Anspruch 5, das weiterhin einen Schritt zum Zuweisen von Sendeleistung zu jeder der $M$ Sendeantennen durch das Verteilen der in Übereinstimmung mit jedem Spreizcodes zugewiesenen Sendeleistung $P_k$ auf die $M$ Sendeantennen umfasst.

**7.** Verfahren nach Anspruch 6, wobei die Sendeleistung $P_{k,m}$ für jede der $M$ Sendeantennen unter Verwendung der folgenden Gleichung zugewiesen wird:

$$P_{k,m} = \frac{1}{M} \left( \frac{1-\gamma}{1-\gamma^K} P_T \right) \gamma^{k-1}, \ k = 1, 2, ..., K, \ m = 1, 2, ..., M$$

wobei $M$ die Gesamtanzahl der Sendeantennen angibt, $k$ einen Index zum Angeben eines Spreizcodes angibt und $m$ einen Index zum Angeben einer Sendeantenne angibt.

**8.** Verfahren nach Anspruch 6, wobei der Schritt zum Teilen der Sendeleistung $P_{k0}$ für einen vorbestimmten Kanal $k_o$ aus den $K$ Kanälen in die Sendeleistung jeder der $M$ Antennen folgende Schritte umfasst:

1) Setzen von $k_o$ auf $K$,
2) Bestimmen $G_{k0}$ unter Verwendung von $(Y_{k0,k0})^+$, nachdem ein vorbestimmter Index i auf ‚1' gesetzt wurde,
3) Berechnen von $\underline{\tilde{\beta}_{k0,g(i)}}$ und $\tilde{\eta}_{k0,g(i)}$ für einen g(i)-ten Teilstrom von $k_0$ unter Verwendung der folgenden Gleichung:

$$g(i) = \underset{j \notin \{g(1),...,g(l-1)\}}{arg\ min} \left( G_{k_0}(i) \left( \sum_{k=k_0+1}^{K} R_{k_0,k}^{MCI} + R_{k_0}^{noise} \right) \left( G_{k_0}(i) \right)^H \right)_{j,j}$$

$$W_{k_0,g(i)} = \left[ G_{k_0}(i) \right]_{g(i)}$$

$$\tilde{\beta}_{k_0,g(i)} = w_{k_0,g(i)} \left( \sum_{k=k_0+1}^{K} R_{k_0,k}^{MCI} \right) w_{k_0,g(i)}^H$$

$$\tilde{\eta}_{k_0,g(i)} = w_{k_0,g(i)} \ R_{k_0}^{noise} \ W_{k_0,g(i)}^{H}$$

4) Bestimmen der Sendeleistung eines Kanals $k_0$ in einer g(i)-ten Antenne unter Verwendung der folgenden Gleichung:

$$P_{k_0,m} = \left(\tilde{\beta}_{k_0,m} + \tilde{\eta}_{k_0,m}\right) \frac{P_{k_0}}{\sum_{m=1}^{M}\left(\tilde{\beta}_{k_0,m} + \tilde{\eta}_{k_0,m}\right)}, \ k_0 = 1, 2, ..., K, m = 1, 2, ..., M$$

wobei, wenn der Index $i$ um '1' erhöht wird, $G_{k0}$ in Entsprechung zu dem erhöhten Index $i$ unter Verwendung von $(\langle Y_{k0,k0}\rangle_{\overline{g(i)}})^{+}$ bestimmt wird und dann ein Prozess zum Bestimmen der Sendeleistung mittels der Schritte 3) und 4) wiederholt wird, bis der Index $i$ die Anzahl $M$ erreicht.

## Revendications

1. Procédé permettant d'allouer une puissance de transmission dans un récepteur appartenant à un système à plusieurs antennes à codes multiples incluant M antennes d'émission et N antennes de réception, le procédé utilisant K codes d'étalement afin de distinguer des canaux, le procédé comprenant les étapes suivantes :

   la détermination d'un rapport de puissances $\gamma$ entre la puissance de transmission de deux codes d'étalement adjacents en utilisant un rapport $\dfrac{\beta}{\eta}$ de la puissance de signaux combinés de canaux sur la puissance du bruit, et
   la transmission vers un émetteur d'un rapport de puissance déterminé $\gamma$,
   dans lequel le rapport $\gamma$ est proportionnel à la puissance des signaux combinés de canaux, est inversement proportionnel à la puissance du bruit et est déterminé comme présentant une valeur dans la plage comprise entre '0' et '1'.

2. Procédé selon la revendication 1, dans lequel le rapport $\gamma$ est déterminé au moyen d'une équation

$$\gamma = 1 / \left(1 + P_T \frac{\beta}{\eta}\right)^{1/K}$$

$P_T$ indiquant la puissance totale de données de transmission, $\dfrac{\beta}{\eta}$ indiquant le rapport des signaux combinés de canaux sur la puissance du bruit et $k$ indiquant le nombre de canaux totaux.

3. Procédé selon la revendication 2, dans lequel, quand G est approché à $L$, $\dfrac{\beta}{\eta}$ est approché par l'équation

$$\frac{\beta}{\eta} \cong \frac{T_c^2 G(L-1)}{MNL\sigma^2 T} \sum_{p=1}^{N} \sum_{m=1}^{M} \sum_{l=0}^{L-1} \left|h_{p,m,l}\right|^2 = \rho$$

**4.** Procédé selon la revendication 2, dans lequel, dans la recherche d'un rapport signal sur bruit en fonction des codes d'étalement en calculant des valeurs moyennes de tous les canaux, $\dfrac{\beta}{\eta}$ est trouvé en utilisant l'équation,

$$\frac{\beta_B}{\eta_B} \cong \frac{T(L-1)}{GL\sigma^2} \Omega_{sum} = p, o\grave{u} \Omega_{sum} = \sum_{l=0}^{L-1} \Omega_l = \sum_{l=0}^{L-1} E\left[\left|h_{p,m,l}\right|^2\right]$$

dans laquelle il est supposé que la totalité des termes $|h_{p,m,l}|^2$ pour un indice de trajet particulier $l$ sont supposées être des variables aléatoires indépendantes et réparties de manière identique avec une moyenne finie $\Omega_1$ pour la totalité des termes $p$ et $m$.

**5.** Procédé permettant d'allouer une puissance de transmission dans l'émetteur d'un système à plusieurs antennes à codes multiples incluant M antennes d'émission et N antennes de réception, le procédé utilisant K codes d'étalement afin de distinguer des canaux, le procédé comprenant les étapes suivantes :

la réception d'un rapport de puissances $\gamma$ entre des puissances de transmission $P_k$, $P_{k+1}$ à allouer à chacun de deux codes d'étalement adjacents, sous forme d'informations de retour envoyées à partir d'un récepteur, et l'allocation de la puissance de transmission $P_k$ en fonction de K codes d'étalement en substituant le rapport de puissances $\gamma$ et la puissance de transmission totale $P_T$ dans l'équation

$$P_k = \left(\frac{1-\gamma}{1-\gamma^K} P_T\right) \gamma^{k-1}, k = 1,2,...,K$$

**6.** Procédé selon la revendication 5, comprenant en outre une étape d'allocation de la puissance de transmission à chacune des M antennes d'émission en répartissant la puissance de transmission $P_k$ allouée en fonction de chaque code d'étalement aux M antennes d'émission.

**7.** Procédé selon la revendication 6, dans lequel la puissance de transmission $P_{k,m}$ pour chacune des M antennes d'émission est allouée au moyen de l'équation

$$P_{k;m} = \frac{1}{M}\left(\frac{1-\gamma}{1-\gamma^K} P_r\right) \gamma^{k-1}, k = 1,2,...,K, m = 1,2,...,M$$

dans laquelle M indique le nombre d'antennes de transmission totales, k indique un indice désignant un code d'étalement et m indique un indice désignant une antenne d'émission.

**8.** Procédé selon la revendication 6, dans lequel l'étape divisant la puissance de transmission $P_k$ pour un canal pré-

déterminé $k_0$ à partir de K canaux en puissance de transmission de chacune des M antennes comprend les étapes suivantes :

1) le réglage de $k_o$ à la valeur K,
2) la détermination de $G_{ko}$ au moyen de $(Y_{k0,k0})^+$ après qu'un indice prédéterminé i soit établi à '1',
3) le calcul de $\underline{\widetilde{\beta}_{k0,g(i)}}$ et $\widetilde{\eta}_{k0,g(i)}$ pour un $g^{ème}$ sous flux de $k_0$ au moyen de l'équation

$$g(i) = \underset{j \in \{ g(1),\dots g(I-1) \}}{\arg \min} \left( G_{k_0}(i) \left( \sum_{k=k_0+1}^{K} R_{k_0,k}^{MCl} + R_{k_0}^{noise} \right) \left( G_{k_0}(i) \right) \right)_{J,J}$$

$$w_{k_0,g(i)} = \left\lfloor G_{k_0}(i) \right\rfloor_{g(i)}$$

$$\widetilde{\beta}_{k_0,g(i)} = w_{k_0,g(i)} \left( \sum_{k=k_0+1}^{K} R_{k_0,k}^{MCl} \right) w_{k_0,g(i)}^{H}$$

$$\widetilde{\eta}_{k_0,g(i)} = w_{k_0,g(i)} R_{k_0}^{noise} w_{k_0,g(i)}^{H}$$

4) la détermination de la puissance de transmission du canal $k_0$ dans l'équation de la 9ème antenne

$$P_{k_0,m} = \left( \widetilde{\beta}_{k_0,m} + \widetilde{\eta}_{k_0,m} \right) \frac{P_{k_0}}{\sum_{m=1}^{M} \left( \widetilde{\beta}_{k_0,m} + \widetilde{\eta}_{k_0,m} \right)}, k_0 = 1,2,\dots,K, m = 1,2,\dots,M$$

dans laquelle i est incrémenté de '1', $G_{k0}$, correspondant à la valeur augmentée de i, est déterminé au moyen de $(\langle Y_{k0,k0} \rangle_{g(i)})^+$, puis un traitement permettant de déterminer la puissance de transmission au moyen des étapes 3) et 4) est répété jusqu'à ce que i atteigne M.

**FIG.1**

Receiver

Output data

Parallel-to-serial converter

$\hat{d}_{1,1}$ ... $\hat{d}_{K,1}$ ... $\hat{d}_{1,M}$ ... $\hat{d}_{K,M}$

Successive MCI cancellation with V-BLAST detection

#1

#N

Power Calculator

Channel

Feedback channel

Transmitter

#1

#M

Power Allocation

$\sqrt{P_{1,1}}$ $\sqrt{P_{K,1}}$ ... $\sqrt{P_{1,M}}$ $\sqrt{P_{K,M}}$

$d_{1,1}c_1(t)$ ... $d_{K,1}c_K(t)$ ... $d_{1,M}c_1(t)$ ... $d_{K,M}c_K(t)$

Serial-to-parallel converter

Input data

Power Allocator

FIG.2

$$k_0 = 1$$

Find correlator bank
output for 1st code

$i = 1$

V-BLAST detection
for the strongest substream

$i = i + 1$

$i \leq M$ ? — YES

NO

$k_0 = k_0 + 1$

Find correlator bank
output for $k_0$th code

MIC regeneration
and cancellation

$k_0 \leq K$ ? — YES

NO

END

FIG.3

Total tx power

⇩

Code power

⇩

Antenna power

$P_T$

$P_1$  $P_2$  $\cdots$  $P_K$

$P_{1,1}$  $P_{1,2}$ $\cdots$ $P_{1,M}$  $\cdots$  $P_{K,1}$  $P_{K,2}$ $\cdots$ $P_{KM,}$

FIG.4

8 codes, 4 Tx, 4 Rx, 2 paths, 32 SF

Legend:
- No MCI cancallation
- MCI cancellation
- Code power (scheme A)
- Code power (scheme B)
- Code & Antenna power

BER vs SNR (dB)

FIG.5

**EP 1 511 187 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEUNG HANG CHING JASON.** *Optimal Power Allocation Scheme on Generalized Layered Space-Time Coding Systems*